# EUROPEAN PATENT SPECIFICATION

(11) **EP 2 216 606 B1**
(45) Date of publication and mention of the grant of the patent: **05.09.2012**
(21) Application number: 10153001.2
(22) Date of filing: 09.02.2010
(51) Int. Cl.: F24D 19/10, G05D 23/19

(54) **Device for converting control signals and monitoring the energy consumption of electric radiators**
Vorrichtung zur Umsetzung der Steuersignale und zur Überwachung des Energieverbrauchs von elektrischen Heizkörpern
Dispositif de conversion de signaux de commande et de control de la consommation d'énergie de radiateurs électriques

(30) Priority: 09.02.2009 IT VI20090023
(43) Date of publication of application: 11.08.2010
(73) Proprietor: Marchetti, Corrado, 31052 Maserada sul Piave (TV) (IT)
(72) Inventor: Marchetti, Corrado, 31052 Maserada sul Piave (TV) (IT)
(74) Representative: Bonini, Ercole

(56) References cited:
- EP-A- 0 617 238
- EP-A- 1 770 338
- DE-U1- 20 210 371
- FR-A- 2 719 440
- FR-A- 2 732 755

## Description

The invention concerns a device for converting control signals and monitoring the energy consumption of electric radiators belonging to heating systems.

The invention also concerns a heating system using one or more of said devices.

It is known that in many European countries, especially in Northern Europe and France, heating systems including fixed wall-mounted electric radiators are largely used in houses, schools, hotels, offices and other structures (see for example patent document FR-A-2719440).

In France, in particular, heating systems must meet some regulatory requirements, including the following:
- each radiator must be provided with a thermostat physically applied to it;
- each thermostat must be able to be remotely controlled;
- the radiator and the thermostat must have insulation characteristics according to Class II, so as not to require the presence of a earth cable.

These requirements, in particular the first two in the list provided above, serve to increase comfort in the environment and to minimise energy waste.

The second requisite, that is, the possibility of remotely controlling the thermostat, in most cases is met by using the so-called "fil pilote" (pilot wire) that, according to the provisions of the protocol "Projet de specification de l'évolution à six ordres du fil pilote" of the company E.D.F. Électricité de France, requires the use, in addition to two phase and neutral wires for connecting the radiator to the power supply line, of a third wire, referred to the neutral, and in fact called "fil pilote", which connects the remote control unit to each thermostat.

The protocol mentioned above uses said "fil pilote" to transfer commands from the remote control unit to the receiving equipment comprising the thermostats of each individual electric radiator of a heating system.

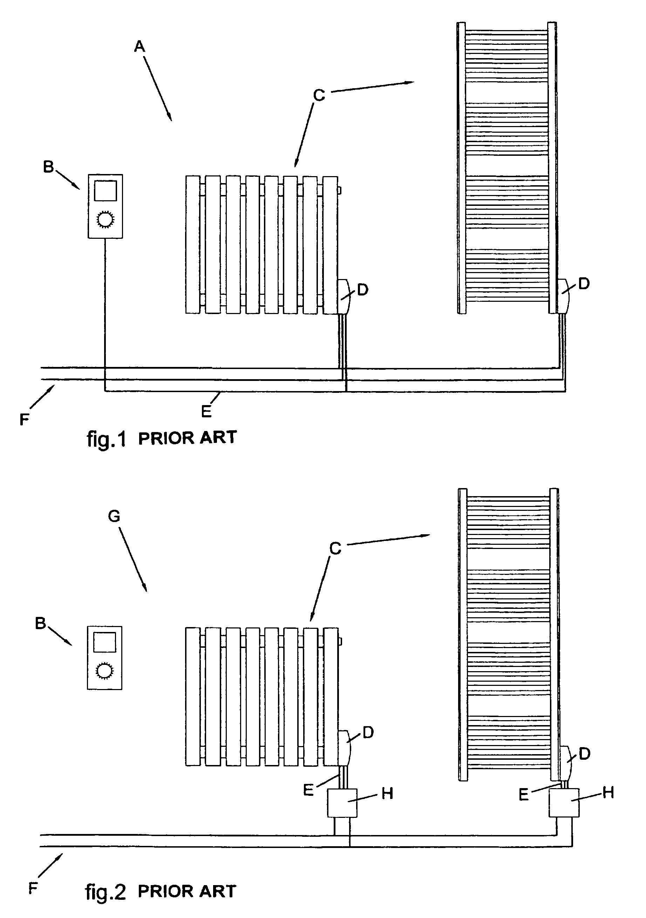

A system of the type described above and belonging to the known art which uses the "fil pilote" (which here below will be translated into English and called "pilot wire") protocol is illustrated by way of example in Figure 1, which shows a heating system indicated as a whole by **A.**

It can be noticed that the control unit **B,** which is remote with respect to the radiators **C,** is in fact connected to the thermostat **D** of each radiator **C** through the pilot wire **E.**

More particularly, the control unit **B,** through the pilot wire **E,** transmits to the thermostats **D** a protocol that, according to the E.D.F. specification mentioned above, consists of six unidirectional controls different from one another, each one of which corresponds to a different operating condition of the radiator **C.**

The commands that are transmitted may concern, for example, different operating modes, like a "comfort" mode, according to which the actual temperature corresponds to the temperature set by the operator, or an "antifreeze" mode, according to which the set temperature never falls below a minimum preset value, or even an "economy mode", according to which the actual operating temperature is lower than the set temperature by a preset value.

An electric line **F** supplies power to the radiators **C.**

In new buildings, electric systems are carried out including the pilot wire during construction, and therefore there are no problems for the use of the "pilot wire" protocol.

On the other hand, this problem is present in old buildings, whose electric systems aren't provided with pilot wire and aren't even structured so as to be able to accommodate it, since they don't have specific pipes or ducts.

It can be understood that in these situations important and costly restructuring operations would be needed to lay the pilot wire, and it would also be necessary to carry out some demolition works in order to makes chases for pipes and ducts.

In order to overcome this drawback, special signal converters have been developed, each one of which produces a connection of the "pilot wire" type with the corresponding thermostat.

In this way, each converter transmits to the thermostat, according to the "pilot wire" standard, the commands received via radio or via waves conveyed by the control unit.

The system configuration described above can be observed in Figure 2, which illustrates a heating system, indicated as a whole by **G,** in which a converter **H** of the type just described is associated with each radiator **C** and is connected to the corresponding thermostat **D** through the pilot wire **E** generated by the same converter **H.**

The systems described above pose the drawback that they don't provide any return information from the thermostats **D** to the control unit **B;** consequently, they do not allow the user to read, on the control unit **B,** the energy consumption values of each individual radiator **C.**

Since the monitoring of consumption is indispensable to obtain effective cost reductions and considerable energy savings, embodiments are known in which an energy meter is installed on the electric line that supplies power to the radiators.

Said energy meter gives an overall consumption value but doesn't allow the user to find out what radiator/radiators in the system consume/s most energy.

Consequently, the user cannot intervene with the specific aim to selectively reduce the consumption of the individual radiators.

The present invention intends to overcome the drawback described above.

In particular, it is a first object of the invention to provide a device for converting control signals and monitoring the energy consumption of the electric radiators of a heating system that makes it possible to measure the energy consumption of each radiator and transmits the measured value to the remote control unit.

It is a further object of the invention to provide a device capable of converting the messages received from the remote control unit and sending them to the thermostat according to the "pilot wire" protocol of company E.D.F. (Électricité de France).

It is a further object of the invention to provide a device capable of associating the metered consumption values of each radiator with the metering date and time and of sending them to the remote control unit.

It is another, yet not the least object of the invention to provide a device that makes it possible to synchronize all the metered data that are sent to the remote control unit.

The objects mentioned above are achieved by a device for converting control signals and monitoring the energy consumption of the electric radiators belonging to a heating system that is described in the main claim, to which the reader should refer for the sake of brevity.

The dependent claims describe further characteristics of the converter of the invention and of the heating system to which it is applied.

Advantageously, the use of the device that is the subject of the invention makes it possible to reduce consumption, as it allows the energy consumption of each radiator to be selectively controlled according to the heating requirements of each room.

Still advantageously, the device that is the subject of the invention also ensures more accurate control of the individual consumption values over time.

To further advantage, said better and more effective control also favours energy savings.

To even further advantage, the converter of the invention makes it possible to use the "pilot wire" protocol also in environments where the electric system isn't provided with pilot wire.

The aims and advantages described above will be highlighted in greater detail in the description of the device that is the subject of the invention and of the heating system using it, with reference to the attached drawings, wherein:
- Figure 1 is a schematic view of a heating system of known type using the "pilot wire" protocol according to the specifications of the French company E.D.F. Électricité de France for the connection of the remote control unit to the thermostats of the radiators;
- Figure 2 shows another heating system of the known type, provided with devices for converting signals using the "pilot wire" protocol according to the specifications of the French company E.D.F. Électricité de France for connection to the thermostats;
- Figure 3 shows a heating system using devices carried out according to the invention for converting signals, connected to each thermostat;
- Figure 4 is a block diagram of the device of the invention shown in Figure 3;
- Figure 5 shows the block diagram of a construction variant of the converter of the invention shown in Figure 3.

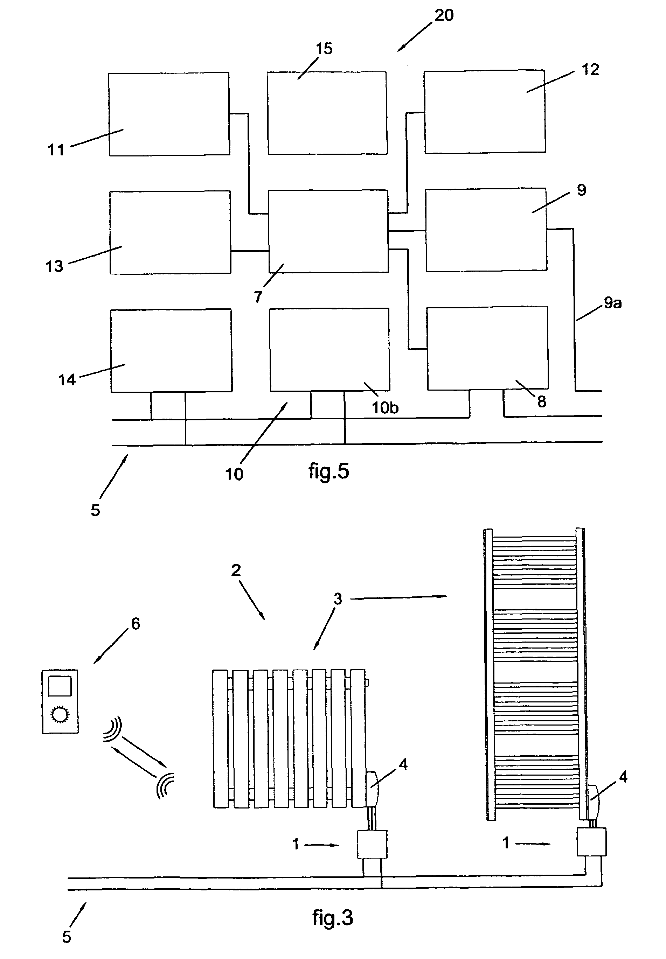

The device that is the subject of the invention is shown in Figure 3, where it is indicated as a whole by **1,** and belongs to a heating system indicated as a whole by **2.**

The heating system **2** is of the type comprising electric radiators **3,** each provided with a thermostat **4,** connected to a power supply line **5,** each one through the interposition of a device **1** carried out according to the invention.

It is important to underline that each block, which belongs to the known art per se, from the circuitry point of view can be carried out in any way.

A remote control unit **6** controls the system.

It is evident that the heating system **2** can also be of a type different from the one illustrated and therefore can comprise any number of radiators, arranged in any way in the rooms to be heated.

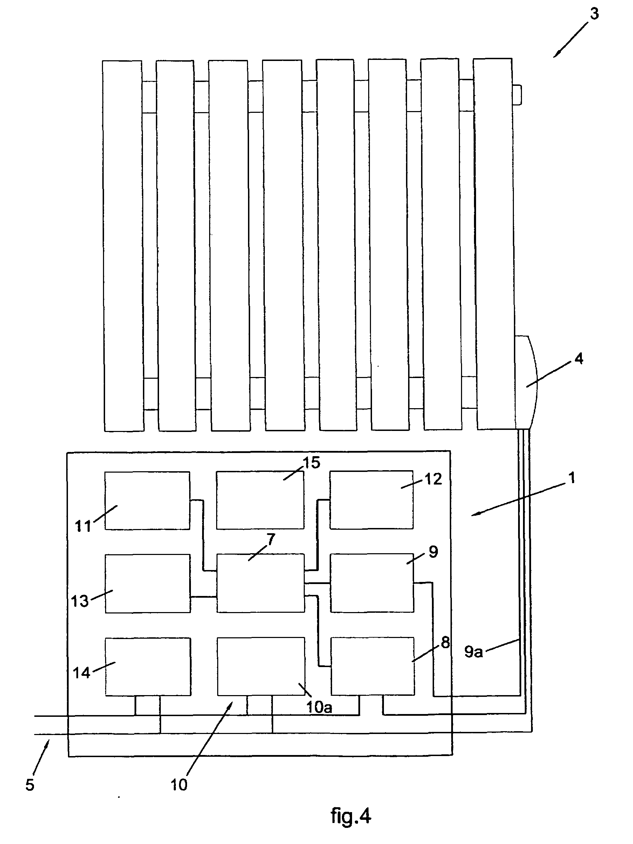

The device **1** serves to convert control signals and monitor the energy consumption of the electric radiators **3** and inside it there is an electric/electronic circuitry through which the functional block diagram shown in Figure 4 can be obtained.

From the circuitry point of view, all the blocks can be carried out in any way, provided that they are suited to be interconnected with one another in the way described herein, in order to serve the functions described here below.

According to the invention, the device **1** comprises:
- a data processing unit **7** for the management of a bidirectional protocol for communication with the remote control unit **6;**
- an energy meter **8** connected to the electric line **5** and to the data processing unit **7;**
- a unidirectional signal generator **9** for sending a control protocol to the thermostat **4,** connected to the data processing unit **7;**
- transmission means **10** for the bidirectional exchange of data between the remote control unit 6 and the data processing unit **7.**
   The unidirectional signal generator **9** is of the "pilot wire" type and is connected to the thermostat **4** via the electric lead **9a.**

Thus it controls the thermostat **4** according to the specifications of the protocol "Projet de specification de l'évolution à six ordres du fil pilote" of company E.D.F. Électricité de France, which is per se a known unidirectional communication system.

Alternatively, any other protocol or individual communication system can be used.

The transmission means **10** comprise a radio frequency transceiver **10a** connected to the data processing unit **7.**

The energy meter **8** is constituted by a metering circuit of any type, in any case belonging to the known art, suited to meter the instantaneous power and the energy consumed by the electric radiator **3.**

The data processing unit **7** comprises a microprocessor that carries out all the logic functions, the most important of which are the following:
- managing the bidirectional protocol for communication with the remote control unit **6**;
- receiving the commands from the remote control unit **6** and converting said commands in the "pilot wire" protocol;
- storing the consumption data read by the energy meter **8** and transmitting said consumption data to the remote control unit **6**;
- calculating the instantaneous power read by the energy meter **8** and transmitting the calculated value to the control unit **6** immediately.
   The device that is the subject of the invention comprises also a memory unit **11** connected to the data processing unit **7**, containing memory supports suited to store the consumption values read.

The memory supports must preferably contain a number of data at least sufficient to compare the consumption values of two operating seasons of the system.

The data processing unit **7** is also connected with a clock **12** suited to register the date and time of the consumption reading made by the energy meter **8.**

Said clock must be of the type provided with an independent internal battery, so that it works even if the device of the invention is off.

It is important to point out that not all of the clocks **12** must be provided with a battery: just one of them is sufficient, as the data processing unit **7**, via the transmission means **10**, provides for the cyclic transmission of the exact time to all the clocks without battery.

The data processing unit **7** is also connected to a synchronizer **13** of the signal generated by the unidirectional signal generator **9,** which makes it possible to synchronize the connection network and obtain the correct generation of the unidirectional signal that, as already explained, will be of the "pilot wire" type.

A power supply unit **14** is also provided, which receives power from the power supply line **5** and through the synchronizer **13** supplies power to the data processing unit **7** and to all the blocks making up the device of the invention.

The device that is the subject of the invention is switched on and off through activation means **15,** accessible to the operator and connected to the data processing unit **7,** said activation means **15** comprising:
- switching on/off means;
- means for activating the connection with the remote control unit **6;**
- means for displaying the status of the device for converting signals that is the subject of the invention.

The functional blocks described above are physically supported by the same structure comprising also the data processing unit **7,** to which all the blocks are directly or indirectly connected through electric leads.

Furthermore, as already explained, they comprise electric/electronic elements of the type known per se and available on the market.

According to a construction variant shown in Figure 5, the device that is the subject of the invention, indicated by **20,** is differentiated from the embodiment described above owing to the fact that the transmission means **10** for the bidirectional exchange of data between the remote control unit **6** and the data processing unit **7** comprise a conveyed wave transceiver **10b** that is connected to the data processing unit **7** and to the power supply line **5.**

In practice, when the device that is the subject of the invention is on, the transmission means **10,** which may comprise a radio frequency transceiver **10a** or a conveyed wave transceiver **10b,** create a bidirectional communication with the remote control unit **6,** which is arranged in any position in any room served by the heating system.

During operation, the signal generator **9** transmits to the corresponding thermostat **4** the commands included in the "pilot wire" protocol while the conversion device is connected in a bidirectional way, and therefore in reception and transmission mode, with the remote control unit **6** for exchanging data via the transmission means **10.**

All the data concerning energy consumption, in particular the instantaneous power and the energy consumed by each radiator, are thus available to the user in the remote control unit **6,** which can be interrogated via buttons or equivalent means.

Said data will be available in the form of numbers, or in the forms of diagrams, or will be displayed via other means.

Furthermore, said data on consumption will be available in real time and together with the date and time at which they were collected.

Therefore, the above description clearly shows that the conversion device that is the subject of the invention achieves all the set objects.

In particular, the invention achieves the object to provide a device for converting signals that makes it possible to monitor the energy consumption of each individual electric radiator belonging to a heating system comprising one or more electric radiators.

The conversion device of the invention converts the messages received from the remote control unit and sends them to the corresponding thermostat, according to the "pilot wire" protocol of company E.D.F.

The invention thus achieves the object to allow use of said protocol also in the cases where the heating system is located in places and rooms whose electric system isn't provided with pilot wire.

The invention also achieves the object to make the energy consumption values measured available to the remote control unit in real time, together with the time and date when they were measured.

Finally, the invention achieves the object to provide data that, once measured and sent to the remote control unit, are synchronized with one another.

Obviously, in the construction stage the device that is the subject of the invention can be subjected to modifications that are neither described herein nor illustrated in the drawings, and are intended to improve its operation.

Said construction variants must all be considered protected by the present patent, provided that they fall within the scope of the claims expressed below.

Where technical features mentioned in any claim are followed by reference signs, those reference sings have been included for the sole purpose of increasing the intelligibility of the claims and accordingly such reference signs do not have any limiting effect on the interpretation of each element identified by way of example by such reference signs.

## Claims

1. Device (1; 20) for converting control signals and monitoring the energy consumption of electric radiators (3) belonging to heating systems (1) having one or more radiators (3) connected to a power supply line (5), one thermostat (4) associated with each radiator (3) and a remote control unit (6) for each one of said thermostats (4), **characterized in that** it comprises:
- a data processing unit (7) for the management of a bidirectional protocol for communication with said remote control unit (6);
- an energy meter (8) connected to said electric line (5) and to said data processing unit (7);
- a unidirectional signal generator (9) for sending a control protocol to said thermostat (4), connected to said data processing unit (7);
- transmission means (10; 10a; 10b) for the bidirectional exchange of data between said remote control unit (6) and said data processing unit (7).

2. Device (1; 20) according to claim 1), **characterized in that** said unidirectional signal generator (9) is of the "pilot wire" type and is connected to said thermostat (4) through an electric lead (9a).

3. Device (1) according to any one of the preceding claims, **characterized in that** said transmission means (10) comprise a radio frequency transceiver (10a) connected to said data processing unit (7).

4. Device (20) according to any one of the claims 1) or 2), **characterized in that** said transmission means (10) comprise a conveyed wave transceiver (10b) connected to said power supply line (5) and to said data processing unit (7).

5. Device (1; 20) according to any one of the preceding claims, **characterized in that** it comprises at least one memory unit (11) connected to said data processing unit (7).

6. Device (1; 20) according to any one of the preceding claims, **characterized in that** it comprises activation means (15) at the disposal of the operator, connected to said data processing unit (7).

7. Device (1; 20) according to any one of the preceding claims, **characterized in that** it comprises at least one clock (12) connected to said data processing unit (7).

8. Device (1; 20) according to any one of the preceding claims, **characterized in that** it comprises one synchronizer (13) of the signal generated by said unidirectional signal generator (9).

9. Device (1; 20) according to any one of the preceding claims, **characterized in that** it comprises a power supply unit (14) connected to said power supply line (5).

10. Heating system (2) comprising:
- one or more electric radiators (3) connected to a power supply line (5);
- one thermostat (4) associated with each radiator;
- at least one remote control unit at the disposal of the operator, for controlling each one of said thermostats (3),
**characterized in that** it comprises a device (1; 20) constructed according to any one of the claims from 1) to 9) for converting control signals and monitoring the energy consumption of said radiators (3).

## Patentansprüche

1. Vorrichtung (1; 20) zur Umwandlung von Steuersignalen und Überwachung des Energieverbrauchs von elektrischen Heizkörpern (3), die zu Heizsystemen (1) gehören, welche einen oder mehrere, an eine Stromversorgungsleitung (5) angeschlossene(n) Heizkörper (3), ein jedem Heizkörper (3) zugeordnetes Thermostat (4) sowie eine externe Steuereinheit (6) für jedes der besagten Thermostate (4) aufweisen, **dadurch gekennzeichnet, dass** sie Folgendes umfasst:
- eine Datenverarbeitungseinheit (7) zur Führung eines bidirektionalen Protokolls für die Kommunikation mit der besagten, externen Steuereinheit (6);
- einen mit der besagten Stromleitung (5) und der besagten Datenverarbeitungseinheit (7) verbundenen Energiemesser (8);
- einen unidirektionalen Signalgenerator (9) für die Sendung eines Steuerprotokolls an das besagte, an die Datenverarbeitungseinheit (7) angeschlossene Thermostat (4);
- Übertragungsmittel (10; 10a; 10b) für den bidirektionalen Datenaustausch zwischen der besagten externen Steuereinheit (6) und der besagten Datenverarbeitungseinheit (7).

2. Vorrichtung (1; 20) gemäß Patentanspruch 1), **dadurch gekennzeichnet, dass** der besagte unidirektionale Signalgenerator (9) vom Typ "Pilotdraht" ist und über einen elektrischen Leiter (9a) an das besagte Thermostat (4) angeschlossen ist.

3. Vorrichtung (1) gemäß eines jeden der vorstehenden Patentansprüche, **dadurch gekennzeichnet, dass** die besagten Übertragungsmittel (10) einen Hochfrequenz-Sendeempfänger (10a) umfassen, der an die besagte Datenverarbeitungseinheit (7) angeschlossen ist.

4. Vorrichtung (20) gemäß eines jeden der vorstehenden Patentansprüche 1) oder 2), **dadurch gekennzeichnet, dass** die besagten Übertragungsmittel (10) einen Trägerfrequenz-Sendeempfänger (10b) umfassen, der an die besagte Stromversorgungsleitung (5) und an die besagte Datenverarbeitungseinheit (7) angeschlossen ist.

5. Vorrichtung (1; 20) gemäß eines jeden der vorstehenden Patentansprüche, **dadurch gekennzeichnet, dass** sie wenigstens eine Speichereinheit (11) umfasst, welche an die besagte Datenverarbeitungseinheit (7) angeschlossen ist.

6. Vorrichtung (1; 20) gemäß eines jeden der vorstehenden Patentansprüche, **dadurch gekennzeichnet, dass** sie dem Bediener zur Verfügung stehende Aktivierungsmittel (15) umfasst, welche an die besagte Datenverarbeitungseinheit (7) angeschlossen sind.

7. Vorrichtung (1; 20) gemäß eines jeden der vorstehenden Patentansprüche, **dadurch gekennzeichnet, dass** sie wenigstens eine Uhr (12) umfasst, welche an die besagte Datenverarbeitungseinheit (7) angeschlossen ist.

8. Vorrichtung (1; 20) gemäß eines jeden der vorstehenden Patentansprüche, **dadurch gekennzeichnet, dass** sie ein Synchronisiergerät (13) für das durch den besagten unidirektionalen Signalgenerator (9) erzeugte Signal umfasst.

9. Vorrichtung (1; 20) gemäß eines jeden der vorstehenden Patentansprüche, **dadurch gekennzeichnet, dass** sie eine Stromversorgungseinheit (14) umfasst, welche an die besagte Stromversorgungsleitung (5) angeschlossen ist.

10. Heizsystem (2), Folgendes umfassend:
- einen oder mehrere elektrische Heizkörper (3), die an eine Stromversorgungsleitung (5) angeschlossen sind;
- ein jedem Heizkörper zugeordnetes Thermostat (4);
- wenigstens eine externe, dem Bediener zur Verfügung stehende Steuereinheit zur Steuerung jedes der besagten Thermostate (3),
**dadurch gekennzeichnet, dass** es eine gemäß einer jeglichen der vorstehenden Patentansprüche von 1) bis 9) konstruierte Vorrichtung (1; 20) zur Umwandlung von Steuersignalen und Überwachung des Energieverbrauchs der besagten elektrischen Heizkörper (3) umfasst.

## Revendications

1. Dispositif (1; 20) pour la conversion de signaux de commande et pour le monitorage de la consommation énergétique des radiateurs électriques (3) appartenant à des installations de chauffage (1) ayant un ou plusieurs radiateurs (3) reliés à une ligne électrique d'alimentation (5), un thermostat (4) associé à chaque radiateur (3) et une unité télécommandée (6) de commande et contrôle de chacun desdits thermostats (4), **caractérisé en ce qu'**il comprend:
- une unité d'élaboration de données (7) pour la gestion d'un protocole bidirectionnel de communication avec ladite unité télécommandée (6) de commande;
- un mesureur d'énergie (8) relié à ladite ligne électrique (5) et à ladite unité d'élaboration de données (7);
- un générateur unidirectionnel de signaux (9) pour l'envoi d'un protocole de commande audit thermostat (4), relié à ladite unité d'élaboration de données (7);
- des moyens de transmission (10; 10a; 10b) pour l'échange bidirectionnel de données entre ladite unité télécommandée (6) de commande et ladite unité d'élaboration de données (7).

2. Dispositif (1; 20) selon la revendication 1), **caractérisé en ce que** ledit générateur unidirectionnel de signaux (9) est du type "fil pilote" et est relié audit thermostat (4) au moyen d'un conducteur électrique (9a).

3. Dispositif (1) selon l'une quelconque des revendications précédentes **caractérisé en ce que** lesdits moyens de transmission (10) comprennent un émetteur-récepteur à radiofréquence (10a) relié à ladite unité d'élaboration de données (7).

4. Dispositif (20) selon l'une quelconque des revendications 1) ou 2), **caractérisé en ce que** lesdits moyens de transmission (10) comprennent un émetteur-récepteur d'ondes convoyées (10b) relié à ladite ligne électrique d'alimentation (5) et à ladite unité d'élaboration de données (7).

5. Dispositif (1; 20) selon l'une quelconque des revendications précédentes **caractérisé en ce qu'**il comprend au moins une unité de mémoire (11) reliée à ladite unité d'élaboration de données (7).

6. Dispositif (1; 20) selon l'une quelconque des revendications précédentes **caractérisé en ce qu'**il comprend des moyens d'activation (15) à la disposition de l'opérateur, reliés à ladite unité d'élaboration de données (7).

7. Dispositif (1; 20) selon l'une quelconque des revendications précédentes **caractérisé en ce qu'**il comprend au moins un horloge (12) relié à ladite unité d'élaboration de données (7).

8. Dispositif (1; 20) selon l'une quelconque des revendications précédentes **caractérisé en ce qu'**il comprend un synchroniseur du signal (13) généré par ledit générateur unidirectionnel de signaux (9).

9. Dispositif (1; 20) selon l'une quelconque des revendications précédentes **caractérisé en ce qu'**il comprend un groupe d'alimentation électrique (14) relié à ladite ligne électrique d'alimentation (5).

10. Système de chauffage (2) comprenant:
- un ou plusieurs radiateurs électriques (3) reliés à une ligne électrique d'alimentation (5);
- un thermostat (4) associé à chaque radiateur;
- au moins une unité télécommandée de commande à la disposition de l'opérateur, pour le contrôle de chacun desdits thermostats (3),
**caractérisé en ce qu'**il comprend un dispositif (1; 20) réalisé selon l'une quelconque des revendications de 1) à 9) pour la conversion de signaux de commande et pour le monitorage de la consommation énergétique desdits radiateurs (3).
